# EUROPÄISCHE PATENTANMELDUNG

(11) **EP 0 598 379 A2**
(43) Veröffentlichungstag der Anmeldung: **25.05.1994**
(21) Anmeldenummer: 93118471.7
(22) Anmeldetag: 16.11.1993
(51) Int. Cl.: B60Q 11/00

(54) **Schaltungsanordnung für eine Blinklichtanlage**

(30) Priorität: 17.11.1992 DE 4238840; 11.02.1993 DE 4303989
(71) Anmelder: Gebhard, Dietrich, D-76316 Malsch (DE)
(72) Erfinder: Gebhard, Dietrich, D-76316 Malsch (DE)
(74) Vertreter: Witte, Alexander, Dr.-Ing.

(57) **Zusammenfassung**

Eine Schaltungsanordnung (10) für eine Blinklichtanlage (11) eines aus einem Zugfahrzeug und einem elektrisch an das Zugfahrzeug anschließbaren Hänger bestehenden Wagenzuges umfaßt einen Blinktaktgeber (17), der dazu ausgelegt ist, an seinem Taktausgang (21) sämtliche je Fahrtrichtung vorgesehenen Blinklampen (12, 13, 14) des Wagenzuges zu betreiben. Der Blinktaktgeber (17) weist einen Kontrollausgang (25) auf, an den der je Fahrtrichtung gleichzeitige Betrieb der entsprechenden Blinklampen (12, 13, 14) des Zugfahrzeuges und des Hängers angezeigt wird. Der Blinktaktgeber (17) treibt ferner eine Signallampe (23) zur Anzeige des Blinktaktes, wobei der Blinktaktgeber (17) bei nicht elektrisch angeschlossenem Hänger den Ausfall einer angesteuerten Blinklampe (12, 13) des Zugfahrzeuges über eine erhöhte Blinkfrequenz anzeigt. Der Kontrollausgang (25) und der Taktausgang (21) des Blinktaktgebers (17) sind mit Schaltmitteln (26) verbunden, die bei elektrisch angeschlossenem Hänger und bei Ausfall einer angesteuerten Blinklampe (12, 13, 14) des Wagenzuges den Blinktaktgeber (17) derart beeinflussen, daß er auf die erhöhte Blinkfrequenz schaltet.

## Beschreibung

Die Erfindung betrifft eine Schaltungsanordnung für eine Blinklichtanlage eines aus einem Zugfahrzeug und einem elektrisch an das Zugfahrzeug anschließbaren Hänger bestehenden Wagenzuges, mit einem Blinktaktgeber, der dazu ausgelegt ist, an seinem Taktausgang sämtliche je Fahrtrichtung vorgesehenen Blinklampen des Zugfahrzeuges zu betreiben, der einen Kontrollausgang aufweist, an dem der je Fahrtrichtung gleichzeitige Betrieb der entsprechenden Blinklampen des Zugfahrzeuges und des Hängers angezeigt wird, und der eine Signallampe zur Anzeige des Blinktaktes treibt, wobei der Blinktaktgeber bei nicht elektrisch angeschlossenem Hänger den Ausfall einer angesteuerten Blinklampe des Zugfahrzeuges über eine erhöhte Blinkfrequenz anzeigt.

Derartige Schaltungsanordnungen sind aus der Praxis bekannt.

Die bekannten Schaltungsanordnungen weisen einen Blinktaktgeber auf, der in der Regel je Fahrtrichtung drei Blinklampen treiben kann. Zwei dieser Blinklampen gehören zu der Blinklichtanlage des Zugfahrzeuges und die dritte Blinklampe zu der Blinklichtanlage des Hängers. Sämtliche Blinklampen werden in der Regel parallel betrieben, so daß der Stromfluß aus dem Blinktaktgeber umso größer wird, je mehr Blinklampen angeschlossen sind.

Ist der Hänger elektrisch an das Zugfahrzeug angeschlossen, so treibt der Blinktaktgeber folglich drei Blinklampen je Fahrtrichtung. In diesem Falle gibt er an seinem C2 genannten Kontrollausgang ein Signal aus, über das mit dem Blinktakt in der Regel eine Kontrolleuchte betrieben wird, die im Armaturenbrett unterzubringen ist. Anhand dieser im Blinktakt blinkenden Kontrolleuchte kann der Fahrzeugführer erkennen, daß sämtliche drei Blinklampen funktionsfähig sind. Zusätzlich weist die Schaltungsanordnung die übliche Signallampe auf, welche ebenfalls in dem Armaturenbrett vorgesehen ist, und nicht nur den Blinktakt sondern auch die Fahrtrichtungsanzeige wiederspiegelt. Wenn der Blinktaktgeber dagegen nur zwei Blinklampen je Fahrtrichtung treibt, sei es, daß eine der drei Blinklampen je Fahrtrichtung ausgefallen ist, oder daß aber kein Hänger elektrisch angeschlossen ist, so gibt der Blinktaktgeber an seinem Kontrollausgang kein Signal aus. Die Signallampe wird jedoch weiter betrieben und zeigt den Blinktakt und die Fahrtrichtung an.

Ist jetzt kein Hänger angeschlossen und fällt zusätzlich eine Blinklampe der Blinklichtanlage des Zugfahrzeuges aus, so erkennt dies der Blinktaktgeber an der veränderten Stromabgabe und schaltet auf eine höhere Blinkfrequenz.

Bei der insoweit beschriebenen Schaltungsanordnung wird es als Nachteil empfunden, daß der Fahrzeugführer anhand der Betriebszustände der Kontrolleuchte und der Signallampe nicht erkennen kann, ob eine der drei Blinklampen je Fahrtrichtung ausgefallen ist oder ob der Hänger nicht richtig gesteckt ist.

Hier ist zu bemerken, daß die Blinktaktgeber üblicherweise nur zum Betreiben von zwei Blinklampen je Fahrtrichtung ausgelegt sind. Soll ein Zugfahrzeug auf Hängerbetrieb umgerüstet werden, so gab es bisher die folgenden beiden Möglichkeiten:

Der zum Betreiben von zwei Blinklampen je Fahrtrichtung vorgesehene Blinktaktgeber wird gegen einen solchen ausgetauscht, der drei Blinklampen je Fahrtrichtung betreiben kann, wie dies eingangs bereits beschrieben wurde. Darüberhinaus muß die zusätzliche Kontrolleuchte C2 im Blickfeld des Fahrzeugführers montiert werden. Insbesondere bei Fahrzeugen mit Airbag und ähnlichen Sicherheitseinrichtungen führt insbesondere das nachträgliche Einbauen dieser Kontrolleuchte zu langwierigen und damit kostenintensiven Arbeiten. Insbesondere bei kleinen Zugfahrzeugen ist es darüberhinaus oft gar nicht möglich, diese zusätzliche Kontrolleuchte im Armaturenbrett unterzubringen.

Darüberhinaus ist es bekannt, den zum Betreiben von zwei Blinklampen je Zugfahrzeug ausgelegten Blinktaktgeber im Fahrzeug zu belassen und entweder die hintere Blinklampe des Zugfahrzeuges oder die Blinklampe des Hängers über eine hochohmige Treiberschaltung zu betreiben, welche den Blinktaktgeber nicht zusätzlich belastet. Die hierzu erforderliche Schaltungsanordnung umfaßt in der Regel noch eine Fehlererkennungsschaltung, welche die jeweils hochohmig betriebene Blinklampe überwacht. Fällt diese dritte Blinklampe aus, was der Blinktaktgeber nicht erkennen kann, so wird eine der beiden unmittelbar von dem Blinktaktgeber betriebenen Blinklampen von dem Blinktaktgeber weggeschaltet und ebenfalls hochohmig betrieben. Auf diese Weise wird dem Blinktaktgeber der Ausfall einer Blinklampe simuliert, was dazu führt, daß der Blinktaktgeber auf die erhöhte Blinkfrequenz umschaltet.

Bei dieser z.B. aus der DE-OS 41 34 993 bekannten Schaltung ist es von Nachteil, daß eine große Anzahl von Bauteilen benötigt wird, um einerseits für das hochohmige Abgreifen und andererseits für das Wegschalten zur Fehlersimulation zu sorgen. Zwar sind mit dieser Schaltungsanordnung die Einbauprobleme beseitigt, welche mit dem Nachrüsten eines für drei Blinklampen vorgesehenen Blinktaktgebers sowie der zugehörigen Kontrolleuchte verbunden sind, es bleiben jedoch die hohen Kosten.

Darüberhinaus ist es aus der DE-OS 41 35 546 bekannt, in die Blinklichtanlage des Zugfahrzeuges zur Beeinflussung des Blinktaktgebers einen Fehlerstrom einzuspeisen, wenn die hochohmig betriebene Blinklampe des Hängers defekt ist. Bei dieser Anordnung kann auf das Wegschalten einer intakten Blinklampe zwar verzichtet werden, es sind jedoch immer noch eine Reihe von Bauteilen erforderlich, welche zu erhöhten Kosten führen. So ist es z.B. nötig, neben der Fehlererkennungsschaltung noch eine Hängererkennungsschaltung vorzusehen, welche anhand eines gesonderten Massekontaktes oder anhand der über weitere Lampen der Signalanlage des Hängers gelieferten Massekontakte erkennt, ob tatsächlich ein Hänger elektrisch an das Zugfahrzeug angeschlossen ist.

Darüberhinaus müssen die bekannten Schaltungen in sogenannten Anhängermodulen im Bereich des Übergabesteckers zwischen Zugfahrzeug und Anhänger im Heck des Zugfahrzeuges untergebracht werden. Dies ist aus Platzgründen jedoch oft mit großem Aufwand verbunden.

Ausgehend von diesem Stand der Technik ist es Aufgabe der vorliegenden Erfindung, eine Schaltungsanordnung der eingangs genannten Art dahingehend weiterzubilden, daß es bei geringem Bauteil- und Montageaufwand möglich wird, sowohl die Blinklampen des Zugfahrzeuges als auch die nur ggf. angeschalteten Blinklampen des Hängers zu überwachen.

Erfindungsgemäß wird diese Aufgabe dadurch gelöst, daß der Kontrollausgang und der Taktausgang des Blinktaktgebers mit Schaltmitteln verbunden sind, die bei elektrisch angeschlossenem Hänger und bei Ausfall einer angesteuerten Blinklampe des Wagenzuges den Blinktaktgeber derart beeinflussen, daß er auf die erhöhte Blinkfrequenz schaltet.

Die der Erfindung zugrundeliegende Aufgabe wird auf diese Weise vollkommen gelöst. Die erfindungsgemäß vorgesehenen Schaltmittel verknüpfen jetzt nämlich den Kontrollausgang und den Taktausgang des Blinktaktgebers derart, daß sie den Ausfall einer angesteuerten Blinklampe des Wagenzuges erkennen, sofern ein Hänger elektrisch angeschlossen ist. Insgesamt sind also drei Informationen erforderlich, welche den elektrischen Anschluß des Hängers, das Vorliegen eines Signales auf dem Kontrollausgang sowie das Vorliegen eines Signales an dem Taktausgang betreffen.

Wenn der Blinktaktgeber an seinem Taktausgang Signale abgibt, also über den Fahrtrichtungsschalter die Blinklampen einer Fahrtrichtung angesteuert werden, so bedeutet das zusätzliche Anstehen eines Signales auf dem Kontrollausgang, daß sämtliche Lampen des Wagenzuges intakt sind. Fehlt jedoch das Signal auf dem Kontrollausgang, so bedeutet dies, daß der Blinktaktgeber bei der üblichen Auslegung nur zwei Blinklampen betreibt. Sollte jetzt ein Hänger elektrisch angeschlossen sein, so folgt daraus, daß eine der üblicherweise drei Blinklampen in der ausgewählten Fahrtrichtung ausgefallen ist. In diesem Falle beeinflussen die Schaltmittel den Blinktaktgeber derart, daß er auf den erhöhten Blinktakt schaltet. Dies kann z.B. durch Einspeisung eines Fehlerstromes oder aber durch Wegschalten einer noch intakten Lampe geschehen, wie dies oben bereits ausführlich beschrieben wurde.

Zusammengefaßt bedeutet dies, daß beim Nachrüsten eines Zugfahrzeuges auf Hängerbetrieb zwar der für zwei Blinklampen je Fahrtrichtung ausgelegte Blinktaktgeber durch einen für drei Blinklampen ausgelegten Blinktaktgeber ausgewechselt werden muß, daß jedoch auf das Nachrüsten der Kontrolleuchte verzichtet werden kann. Der Fahrzeugführer kann anhand der üblichen Signallampe erkennen, ob eine der angesteuerten Blinklampen des Wagenzuges ausgefallen ist. Der Montageaufwand gegenüber dem Stand der Technik wird dadurch erheblich reduziert. Insbesondere können die neuen Schaltmittel vorne im Zugfahrzeug in der Nähe des Blinktaktgebers angeordnet werden,, so daß größere Nachrüstarbeiten im Heck entfallen. Hier wird nur noch der Übergabestecker benötigt, über den die Lampen des Anhängers zu denen des Zugfahrzeuges parallel geschaltet werden.

Es ergeben sich aber noch weitere Vorteile gegenüber den Schaltungsanordnungen, mit denen bisher Zugfahrzeuge nachgerüstet wurden, ohne daß der Blinktaktgeber für drei Blinklampen eingewechselt werden mußte. Bei der neuen Schaltungsanordnung wird nämlich die Fähigkeit des für drei Blinklampen ausgelegten Blinktaktgebers ausgenutzt, zwischen Betriebszuständen mit drei angesteuerten Blinklampen (Hänger angekoppelt), mit zwei angesteuerten Blinklampen (nur Zugfahrzeug) oder mit nur einer angesteuerten Blinklampe (nur Zugfahrzeug, eine Blinklampe des Zugfahrzeuges defekt) zu unterscheiden. Die im Stand der Technik erforderlich gewesene Fehlererkennungsschaltung fällt also weg, diese Funktion übernimmt der C2-Ausgang.

In einer bevorzugten Weiterbildung ist die Schaltungsanordnung dadurch gekennzeichnet, daß die Schaltmittel zur Beeinflussung des Blinkgebers einen Fehlerstrom in die Blinklichtanlage des Wagenzuges einspeisen.

Dies ist insbesondere deshalb von Vorteil, weil sich die Schaltungsanordnung bezüglich des Bauteilebedarfes weiter reduziert. Durch den zusätzlich eingespeisten Fehlerstrom wird nämlich dem Blinktaktgeber der Ausfall einer weiteren Lampe simuliert. Diese Maßnahme ist an sich aus der DE-OS-41 35 546 bekannt. Dort dient sie jedoch in Zusammenhang mit hochohmig betriebenen Blinklampen des Hängers dazu, einen zum Betreiben von zwei Blinklampen ausgelegten Blinktaktgeber "außer Tritt" zu bringen.

Hier ist es ferner bevorzugt, wenn eine Hängererkennungsschaltung vorgesehen ist, die einen elektrisch an das Zugfahrzeug angeschlossenen Hänger auf einer Hängererkennungsleitung meldet.

Hier ist von Vorteil, daß der Hänger automatisch erkannt wird, so daß der Fahrzeugführer nicht mehr nach dem Ankoppeln und elektrischen Anschalten des Hängers einen entsprechenden Schalter umlegen muß. Dies führt insoweit ebenfalls zu einer Reduzierung der Bauteile, da der zusätzliche Schalter wegfällt. Die Hängererkennungsschaltung ist an sich aus dem Stand der Technik bekannt. Neben der Abfrage der Hängermasse kann sie ihre Informationen auch durch Überwachung des Stromflusses beispielsweise durch den Schalter für Bremslicht und/oder Standlicht ableiten. Ein erhöhter Stromfluß deutet auf einen angeschlossenen Hänger hin.

Dabei ist es weiter bevorzugt, wenn die Hängererkennungsschaltung mit dem Kontrollausgang des Blinktaktgebers verbunden ist und aus den Signalen des Kontrollausganges einen elektrisch angeschlossenen Hänger erkennt.

Hier ist jetzt weiter von Vorteil, daß das sowieso erzeugte Signal auf dem Kontrollausgang dazu verwendet wird, einen Hänger zu erkennen. Dabei wird ausgenutzt, daß der Kontrollausgang nur dann ein Signal abgibt, wenn auch tatsächlich ein Hänger elektrisch angeschlossen ist und die Blinklichtanlage des Wagenzuges entsprechend betätigt wird. Die aus dem Stand der Technik bekannten Maßnahmen, einen zusätzlichen Hängererkennungskontakt oder eine Masseabfragevorrichtung für die Hängermasse vorzusehen, können damit entfallen. Auch dies führt zu einem sehr geringen Bauteilbedarf. Ferner ist es jetzt möglich, nicht nur die neuen Schaltmittel vorne im Zugfahrzeug unterzubringen, sondern auch die Hängererkennung ohne zusätzliche Leitungen zum Heck des Zugfahrzeuges aus vorne vorhandenen Informationen abzuleiten.

Der C2-Ausgang wird also doppelt genutzt, einmal zur Hängererkennung und zusätzlich als eine Art Fehlererkennungsschaltung für die Zahl der betriebenen Lampen.

Bei dieser Ausführung ist es bevorzugt, wenn die Hängererkennungsschaltung ein Speicherelement umfaßt, welches das erste Ansprechen des Kontrollausgangs speichert und permanent auf der Hängererkennungsleitung meldet.

Diese Maßnahme ist insbesondere unter schaltungstechnischen Randbedingungen von Vorteil, denn es muß lediglich ein Speicherelement vorgesehen sein, was nach dem ersten Ansprechen des Kontrollausganges in einen permanenten Zustand geschaltet wird, aus dem es beispielsweise erst nach dem Öffnen des Zündschalters wieder zurückgesetzt wird. Mit anderen Worten geht das Speicherelement beispielsweise nach dem Starten des Zugfahrzeuges zunächst in einen Grundzustand, in dem es kein Signal auf der Hängererkennungsleitung ausgibt. Wird dann zum ersten Mal der Fahrtrichtungsschalter betätigt, so spricht der Kontrollausgang an, was von dem Speicherelement gespeichert wird. Auf diese Weise kann im einfachsten Fall ein Flip-Flop an den Kontrollausgang angeschlossen werden, wobei der Ausgang des Flip-Flops dann mit der Hängererkennungsleitung verbunden wird.

Ferner ist es bevorzugt, wenn die Schaltmittel eine Schaltvorrichtung umfassen, die den Fehlerstrom in Übereinstimmung mit dem Takt des Blinktaktgebers wieder abschaltet.

Diese Maßnahme ist an sich bekannt. Sie dient dazu, eine Selbsthaltefunktion zu vermeiden. Zwar ist es zulässig, permanent einen Fehlerstrom in die Blinklichtanlage einzuspeisen, so daß bei einer defekten Blinklampe die Signallampe permanent leuchtet, üblicherweise wird jedoch lediglich die Blinkfrequenz erhöht.

Um also zu vermeiden, daß der einmal eingespeiste Fehlerstrom dazu führt, daß die Schaltmittel permanent einen Fehlerstrom einspeisen, ist die erwähnte Schaltvorrichtung vorgesehen.

Dabei ist es bevorzugt, wenn die Zeitmittel ein Schaltglied umfassen, das den Taktausgang von dem Fehlerstrom entkoppelt.

Hier ist von Vorteil, daß durch die einfache Entkopplung die Selbsthaltefunktion aufgehoben wird. Da der Fehlerstrom nicht auf den Taktausgang rückkoppeln kann, können die Schaltmittel nach dem Abfallen des Blinktaktgebers nicht von dem Fehlerstrom derart beeinflußt werden, daß der Fehlerstrom dauernd gehalten wird.

Insgesamt ist es hierbei bevorzugt, wenn der Kontrollausgang mit einer akustischen Einrichtung verbunden ist.

Es wurde bereits erwähnt, daß bei der neuen Schaltungsanordnung auf das Nachrüsten der zusätzlichen Kontrolleuchte im Armaturenbrett verzichtet werden kann. Um jedoch in Übereinstimmung mit dem § 54 STVO für eine Anzeige des Hängerbetriebes zu sorgen, wird die akustische Einrichtung vorgesehen. Der Kontrollausgang kann nun entweder jedesmal bei seinem Ansprechen über die akustische Einrichtung ein akustisches Signal abgeben, so daß der Fahrzeugführer jederzeit über die Funktionsfähigkeit sämtlicher Blinklampen je Fahrtrichtung informiert ist, oder dies aber nur einmal zu Beginn der Fahrt tun. Da der Fahrzeugführer weiß, daß er über die übliche Signallampe vollständig über den Zustand seiner Blinklichtanlage informiert wird, kann das zusätzliche akustische Signal nun dazu verwendet werden, dem Fahrzeugführer zu Beginn der Fahrt einmal anzuzeigen, daß der Hänger korrekt elektrisch an das Zugfahrzeug angeschlossen wurde. Fehlt das Signal, so muß der Fahrzeugführer gleich zu Fahrtbeginn die Blinklichtanlage überprüfen.

Weiterhin ist es bevorzugt, wenn die Schaltmittel eine Logikschaltung aufweisen, die den Taktausgang, den Kontrollausgang und die Hängererkennungsleitung logisch miteinander verknüpft und an ihrem Ausgang eine Vorrichtung zum Einspeisen des Fehlerstromes schaltet.

Auf diese Weise kann eine einfache Logikschaltung z.B. in Form eines UND-Gatters mit ggf. invertierenden Eingängen die drei bereits eingangs erwähnten Signale so miteinander verknüpfen, daß der Ausgang der Logikschaltung unmittelbar zum Schalten der Vorrichtung zum Einspeisen des Fehlerstromes verwendet werden kann. Auch auf diese Weise wird der Bauteilbedarf der neuen Schaltungsanordnung gegenüber bekannten Schaltungsanordnungen deutlich reduziert.

In der einfachsten Ausführung erfordert die neue Schaltungsanordnung damit ein Speicherelement zur Ausgabe der Hängererkennung, eine Diode zur Entkopplung des Fehlerstromes von dem Taktausgang, ein UND-Gatter mit drei Eingängen, sowie ein von dem Ausgang des UND-Gatters geschaltetes Relais zur Einspeisung des Fehlerstromes. Beim Austausch des für zwei Blinklampen je Fahrtrichtung vorgesehenen Blinktaktgebers gegen den für drei Blinklampen vorgesehenen Blinktaktgebers kann diese Schaltanordnung mit eingebaut werden, ohne daß größere Montagearbeiten an dem Zugfahrzeug durchgeführt werden müssen. Die neue Schaltungsanordnung umfaßt derart wenige Bauteile, daß sie sehr preiswert hergestellt werden kann. Darüberhinaus ist der Montageaufwand verglichen mit dem Einbau der zusätzlichen Kontrolleuchte vernachlässigbar gering.

Ferner ist es bevorzugt, wenn die Hängererkennungsschaltung mit einer Reset-Vorrichtung verbunden ist, über welche die Hängererkennungsleitung zurückschaltbar ist.

Diese Maßnahme ist insbesondere dann von Vorteil, wenn der Fahrzeugführer bei laufendem Zugfahrzeug den Hänger abkoppelt. Wäre jetzt keine Reset-Vorrichtung vorgesehen, so würde die Hängererkennungsschaltung immer noch den vorher gespeicherten Zustand eines angeschalteten Hängers auf der Hängererkennungsleitung ausgeben. Dies würde beim Betätigen des Fahrtrichtungsschalters dazu führen, daß die Schaltmittel einen Fehlerzustand erkennen und den Blinktaktgeber entsprechend beeinflussen. Während nämlich das Hängererkennungssignal noch ansteht, fehlt jetzt das zugeordnete Signal auf der C2-Leitung, da ja nur noch zwei Blinklampen je Fahrtrichtung betrieben werden.

Dabei ist es bevorzugt, wenn die Reset-Vorrichtung einen Schließkontakt umfaßt.

Dies ist die schaltungstechnisch einfachste Möglichkeit, einen Speicherbaustein zurückzusetzen. Dieser Schließkontakt kann ein Druckschalter sein, den der Fahrzeugführer nach dem Abkoppeln des Hängers kurz betätigt, um die Hängererkennungsschaltung zurückzusetzen. Gegenüber dem Einbau der im Blickfeld des Fahrers anzubringenden C2-Lampe hat dies den Vorteil, daß der Druckschalter an einer beliebigen Stelle untergebracht werden kann, was zu erheblich erleichterten Einbaubedingungen führt. Der Schließkontakt kann aber auch ein Türkontakt sein, der beim Öffnen der Fahrertür oder der Beifahrertür geschlossen wird. Steigen jetzt der Fahrer oder der Beifahrer aus dem laufenden Zugfahrzeug aus, um einen Hänger abzukoppeln, so führt dies automatisch zum Zurücksetzen der Hängererkennungsschaltung.

Dabei ist es weiter bevorzugt, wenn die Reset-Vorrichtung eine Meßvorrichtung für den Stromfluß durch ausgewählte Lampen des Hängers umfaßt und in Abhängigkeit von dem Stromfluß die Hängererkennungsleitung zurückschaltet.

Hier ist von Vorteil, daß auch dann, wenn eine dritte Person den Hänger abkoppelt, ohne daß eine der Türen geöffnet wurde, die Hängererkennungsschaltung jetzt durch die Meßvorrichtung zurückgesetzt wird. Zu diesen ausgewählten Lampen zählen vorzugsweise das Bremslicht oder das Standlicht. Die Reset-Vorrichtung muß lediglich über zwei Kabel mit dem entsprechenden Schalter beispielsweise für das Bremslicht verbunden werden, wobei die Meßvorrichtung zwischen Zuständen unterscheiden kann, in denen nur die Zugfahrzeug- oder zusätzlich noch die Hängerlampen angesteuert werden. Nachdem der Hänger abgekoppelt wurde, wird somit beim ersten Bremsen erkannt, daß kein Hänger vorliegt. Die Reset-Vorrichtung gibt daraufhin ein Rücksetzsignal an die Hängererkennungsschaltung aus.

Insgesamt ist es bevorzugt, wenn der Kontrollausgang mit einer Verriegelungsvorrichtung verbunden ist, die in Abhängigkeit von dem Betrieb der Warnblinkanlage den Kontrollausgang von der Hängererkennungsschaltung abkoppelt.

Diese Maßnahme ist für Blinktaktgeber vorgesehen, die auch dann ein C2-Signal ausgeben, wenn ohne elektrisch angeschlossenen Hänger die Warnblinkanlage betätigt wird, wenn also insgesamt vier Lampen von dem Blinktaktgeber versorgt werden. Diese Blinktaktgeber können nicht zwischen dem Betrieb von drei Blinklampen - Zugfahrzeug + Hänger - und dem Betrieb von vier Blinklampen - kein Hänger, aber Warnblinkanlage des Zugfahrzeuges eingeschaltet - unterscheiden. Daher muß die beim Betrieb der Warnblinkanlage fehlerhaft erfolgende Hängererkennung verhindert oder rückgängig gemacht werden. Zu diesem Zweck ist die Verriegelungsvorichtung vorgesehen, die den Kontrollausgang von der Hängererkennungsschaltung abkoppelt. Auf diese Weise ist sichergestellt, daß beim Betrieb der Warnblinkanlage der Kontrollausgang der Hängererkennungsschaltung nicht in den Zustand schaltet, in dem sie auf ihrer Hängererkennungsleitung einen elektrisch angeschlossenen Hänger meldet.

Weiter ist es bevorzugt, wenn die Verriegelungsvorrichtung eine Meßschaltung für den von dem Blinktaktgeber abgegebenen Lampenstrom aufweist.

Hier ist von Vorteil, daß die Verriegelungsschaltung selbst erkennt, ob der Blinktaktgeber drei oder vier Lampen betreibt. Nur in dem Fall, in dem vier Lampen betrieben werden, wird der Kontrollausgang von der Hängererkennungsschaltung abgekoppelt. Hier ergeben sich aber auch keine Probleme, wenn beim Betrieb der Warnblinkanlage nur drei Lampen in Betrieb sind, weil eine der Lampen der Blinklichtanlage des Zugfahrzeuges ausgefallen ist. Zwar wird durch das Betätigen der Warnblinkanlage die Hängererkennungsschaltung entsprechend gesetzt, die daraufhin bei normalem Betrieb der Blinklichtanlage erfolgende Fehlermeldung würde jedoch sowieso zumindest in einer Fahrtrichtung erfolgen. Die Schaltmittel erwarten jetzt nämlich ein C2-Signal, wenn der Fahrtrichtungsschalter betätigt wird. Da jedoch kein Hänger angeschaltet ist, versetzen die Schaltmittel den Blinktaktgeber in den Fehlerzustand, in dem er mit höherer Blinkfrequenz arbeitet. Da aber tatsächlich eine der Lampen des Zugfahrzeuges defekt ist, bietet diese Maßnahme sogar den zusätzlichen Vorteil, daß die defekte Lampe auch dann angezeigt wird, wenn der Fahrtrichtungsschalter bei dem augenblicklichen Schaltungszustand zwei funktionierende Lampen ansteuert; weil nämlich eine der Lampen der zur Zeit nicht ausgewählten Fahrtrichtung defekt sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: eine prinzipielle Darstellung der neuen Schaltungsanordnung, in welcher die Blinklampen einer Fahrtrichtung, der Blinktaktgeber und die Schaltmittel schematisch dargestellt sind;
- Fig. 2: ein erstes Ausführungsbeispiel der Schaltmittel aus Fig. 1;
- Fig. 3: ein zweites Ausführungsbeispiel der Schaltmittel aus Fig. 1; und
- Fig. 4: ein drittes, ausschnittsweise dargestelltes Ausführungsbeispiel der Schaltmittel aus Fig. 1, das eine Ergänzung für das erste und das zweite Ausführungsbeispiel umfaßt.

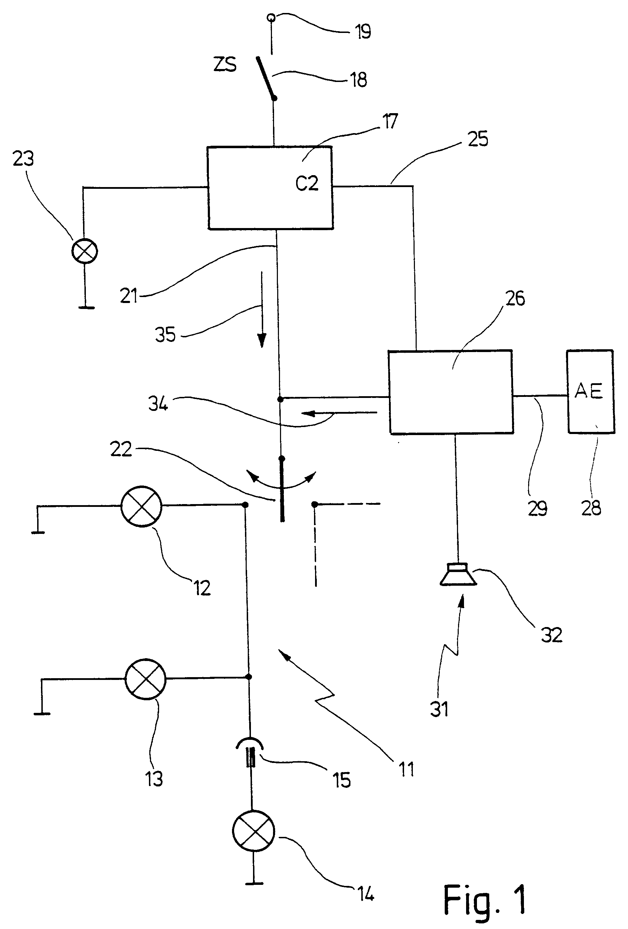

In Fig. 1 ist insgesamt mit 10 eine Schaltungsanordnung für eine bei 11 angedeutete Blinklichtanlage eines Wagenzuges bezeichnet. Die Blinklichtanlage 11 umfaßt je Fahrtrichtung drei Blinklampen 12, 13, 14. Die Blinklampen 12 und 13 sind Blinklampen des Zugfahrzeuges, während die Blinklampe 14 zu einem an das nicht dargestellte Zugfahrzeug elektrisch angeschlossenen Hänger gehört und über einen bei 15 gezeigten Stecker zu den Blinklampen 12 und 13 parallel geschaltet ist.

Die Blinklichtanlage 11 ist in Fig. 1 nur für eine Fahrtrichtung dargestellt, die Blinklampen der zweiten Fahrtrichtung sind jedoch entsprechend verschaltet.

Zum Betreiben der Blinklichtanlage 11 ist ein Blinktaktgeber 17 vorgesehen, welcher über einen mit ZS bezeichneten Zündschalter 18 mit einer Versorgungsspannung 19 verbunden ist, die üblicherweise dem Plusanschluß der Fahrzeugbatterie entspricht.

Der Blinktaktgeber 17 ist an seinem Taktausgang 21 mit einem Fahrtrichtungsschalter 22 verbunden, der in Fig. 1 in seiner neutralen Mittenstellung gezeigt ist. Durch Verschwenken des Fahrtrichtungsschalters wird einer der beiden Zweige der Blinklichtanlage 11 mit dem Taktausgang 21 verbunden. Wenn dies geschieht, so gibt der Blinktaktgeber 17 an seinem Taktausgang 21 den Blinktakt aus und zeigt dies auf einer Signallampe 23 an.

Der Blinktaktgeber 17 weist ferner einen auch C2 genannten Kontrollausgang 25 auf, der mit noch näher zu erläuternden Schaltmitteln 26 verbunden ist.

Der Blinktaktgeber 17 ist ein üblicher, für den Betrieb von drei Blinklampen je Fahrtrichtung ausgelegter Blinktaktgeber. Sind alle drei angeschlossenen Blinklampen 12, 13, 14 in Ordnung, so gibt der Blinktaktgeber sowohl auf dem Kontrollausgang 25 als auch auf der Signallampe 23 den Blinktakt an. Betreibt der Blinktaktgeber 17 dagegen nur zwei Blinklampen, so gibt er auf dem Kontrollausgang 25 kein Signal aus, während die Signallampe 23 weiter im Rhythmus des Blinktaktes blinkt. Dieser Zustand tritt ein, wenn entweder eine der drei Blinklampen 12, 13 oder 14 defekt ist, oder aber wenn der Hänger nicht elektrisch angeschlossen ist.

Wenn der Blinktaktgeber 17 nur eine Blinklampe 12 oder 13 oder 14 treibt, so erkennt er dies als Fehler und schaltet auf eine höhere Blinkfrequenz um. Dies wird auch auf der Signallampe 23 angezeigt, so daß der Fahrzeugführer den Fehlerzustand erkennt. Bei der insoweit beschriebenen Schaltungsanordnung 10 ist es dem Fahrzeugführer jedoch nicht möglich, zwischen dem Zustand zu unterscheiden, in dem der Hänger nicht elektrisch angeschlossen ist und dem Zustand, in dem eine der drei Blinklampen 12, 13 oder 14 defekt ist.

Um diese Unterscheidung zu ermöglichen, sind die Schaltmittel 26 vorgesehen, welche sowohl mit dem Kontrollausgang 25 als auch mit dem Taktausgang 21 verbunden sind.

Die Schaltungsanordnung 10 umfaßt ferner eine auch AE abgekürzte Hängererkennungsschaltung 28, welche über ihre Hängererkennungsleitung 29 mit den Schaltmitteln 26 verbunden ist. Die Hängererkennungsschaltung 28 erkennt in noch näher zu beschreibender Weise, ob ein Hänger elektrisch an das Zugfahrzeug angeschaltet ist. In diesem Falle gibt er auf der Hängererkennungsleitung 29 ein entsprechendes Signal aus.

In Fig. 1 ist ferner eine mit 31 gekennzeichnete akustische Einrichtung zu erkennen, welche in dem gezeigten Beispiel ein Piezosummer 32 ist.

Die Schaltmittel 26 vermögen jetzt in noch zu beschreibender Weise zu erkennen, ob eine der drei Blinklampen 12, 13 und 14 defekt ist oder aber nur die Blinklampen 12 und 13 vorhanden sind, ob also gar kein Hänger angeschaltet ist. Diese Information gewinnen die Schaltmittel 26 aus einer logischen Verknüpfung der Signale am Taktausgang 21, Kontrollausgang 25 und auf der Hängererkennungsleitung 29.

Erkennen die Schaltmittel 26, daß eine der drei Blinklampen 12, 13 oder 14 defekt ist, so geben sie einen Fehlerstrom 34 aus, welcher in die Blinklichtanlage 11 des Wagenzuges eingespeist wird. Dieser Fehlerstrom führt dazu, daß der Blinktaktgeber einen geringeren Betriebsstrom 35 abgibt, denn die beiden verbleibenden funktionsfähigen Blinklampen der Blinklichtanlage 11 werden jetzt etwa zur Hälfte durch den Fehlerstrom 34 und durch den Betriebsstrom 35 gespeist. Diesen Betriebszustand erkennt der Blinktaktgeber 17 als Ausfall einer weiteren Blinklampe, da er nun nur noch den Strom für eine Blinklampe liefert. Der Blinktaktgeber wird also derart beeinflußt, daß er in einen Schaltzustand gerät, wie er ihn normalerweise nur dann annimmt, wenn er lediglich eine Blinklampe treibt. Dieser Schaltzustand führt dazu, daß der Blinktaktgeber 17 auf eine erhöhte Blinkfrequenz umschaltet und dieses als Fehler auf der Signallampe 23 anzeigt.

Obwohl also in dem durchgespielten Fall nur eine der drei angesteuerten Blinklampen 12, 13 oder 14 defekt ist, zeigt der Blinktaktgeber 17 dies auf die selbe Weise an, wie er bei Betrieb ohne Hänger den Ausfall einer der beiden Blinklampen 12 oder 13 des Zugfahrzeuges anzeigen würde. Bei dem Umrüsten eines konventionellen Zugfahrzeuges von einem für den Betrieb von zwei Blinklampen ausgelegten Blinktaktgeber auf den Blinktaktgeber 17 kann also auf das nachträgliche Einbauen einer Kontrollleuchte verzichtet werden, welche die auf den Kontrollausgang 25 anstehenden Signale anzeigt. Der Fahrzeugführer wird über die Signallampe 23, die sowieso im Armaturenbrett vorgesehen ist, vollständig über den Zustand seiner Blinklichtanlage informiert. Als zusätzliche Maßnahme ist der Piezosummer 32 vorgesehen, welcher von den Schaltmitteln 26 wahlweise so angesteuert wird, daß er entweder im Rhythmus der Signale des Kontrollausganges 25 ein akustisches Signal abgibt, oder dieses akustische Signal nur einmal zu Beginn des ersten Blinkvorganges je Fahrt ertönen läßt. Im letzteren Falle wird dem Fahrzeugführer durch das einmalige Signal angezeigt, daß der Hänger korrekt angeschaltet ist.

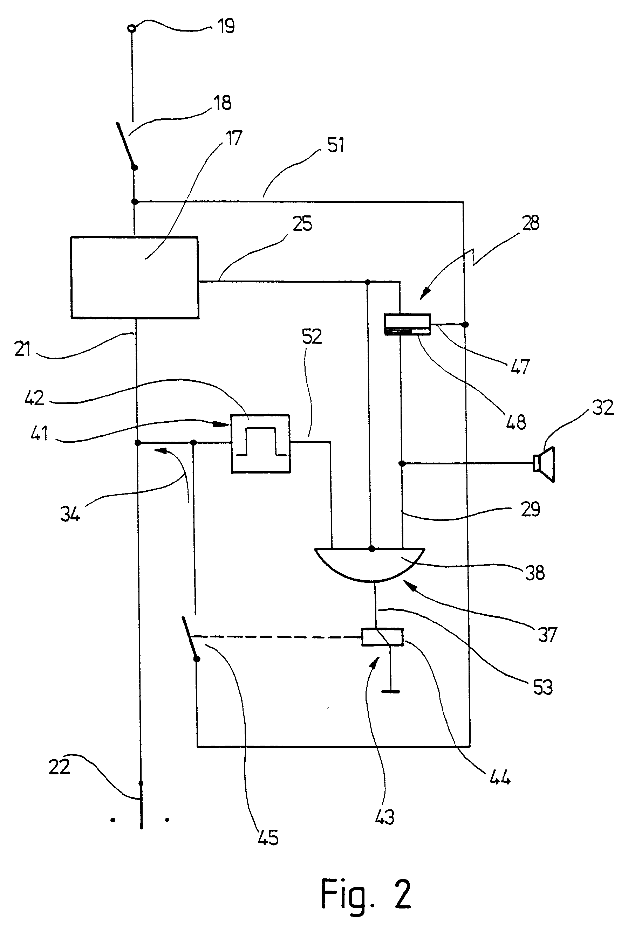

In Fig. 2 sind die Schaltmittel 26 in einem ersten Ausführungsbeispiel genauer dargestellt.

Es ist zu erkennen, daß die Schaltmittel 26 eine Logikschaltung 37 in Form eines UND-Gatters 38 umfassen. Das UND-Gatter 38 weist drei Eingänge auf, von denen einer mit der Hängererkennungsleitung 29, ein weiterer invertierender mit dem Kontrollausgang 25 und ein dritter über eine Schaltvorrichtung 41 in Form eines Monoflops 42 mit dem Taktausgang 21 verbunden ist.

An seinem Ausgang ist das UND-Gatter 38 mit einer Vorrichtung 43 zum Einspeisen des Fehlerstromes 34 verbunden. Die Vorrichtung 43 ist in dem gezeigten Beispiel ein Relais 44, welches einen Schließkontakt 45 schaltet. Statt des Relais 44 kann jedoch auch ein Halbleiterschalter vorgesehen sein.

Ferner ist zu erkennen, daß die Hängererkennungsschaltung 28 ein Speicherelement 47 in Form eines Flip-Flop 48 umfaßt. Das Flip-Flop 48 ist an einem seiner Eingänge mit dem Kontrollausgang 25 und an seinem Ausgang mit der Hängererkennungsleitung 29 verbunden. Ferner ist das Flip-Flop über eine Versorgungsleitung 51 mit dem Zündschalter 18 verbunden, über welchen es mit der Versorgungsspannung 19 versorgt wird.

Die Anordnung ist derart getroffen, daß das Flip-Flop 48 jedesmal in seinen Ruhezustand zurückversetzt wird, wenn der Zündschalter 18 geöffnet wird. Nach dem Schließen des Zündschalters 18 bleibt das Flip-Flop 48 solange in seinem Ruhezustand, bis an dem Kontrollausgang 25 ein Signal ausgegeben wird. Aus dem oben erklärten ergibt sich, daß der Kontrollausgang 25 nur dann ein Signal ausgibt, wenn alle drei Blinklampen 12, 13 und 14 angeschlossen und funktionsfähig sind, wenn also der Hänger an das Zugfahrzeug elektrisch angekoppelt ist. Dieses Signal an dem Kontrollausgang 25 wird in dem Flip-Flop 48 gespeichert und permanent über die Hängererkennungsleitung 29 an das UND-Gatter 38 weitergegeben. Der Ausgang des Flip-Flops 38 ist ebenfalls mit dem Piezosummer 32 verbunden, der bei dem ersten Ansprechen des Kontrollausganges 25 ein akustisches Signal abgibt, und dem Fahrzeugführer dadurch anzeigt, daß der Hänger korrekt angeschlossen ist.

Wenn jetzt der Fahrtrichtungsschalter 22 betätigt wird, gibt der Blinktaktgeber 17 an seinem Taktausgang 21 ein Taktsignal aus. Dies führt dazu, daß das Monoflop 42 angestoßen wird und an seinem Ausgang 52 ein Signal in das UND-Gatter 38 einspeist. Sind jetzt alle drei Blinklampen 12, 13 und 14 funktionsfähig, so gibt der Kontrollausgang 25 ebenfalls ein Signal aus, das invertiert in das UND-Gatter 38 weitergeleitet wird. In diesem Falle bleibt das UND-Gatter 38 an seinem Ausgang 53 auf logisch L und das Relais 44 wird nicht geschaltet.

Sollte jedoch eine der drei Blinklampen 12, 13 oder 14 defekt sein, so bleibt das Signal an dem Kontrollausgang 25 aus. Das UND-Gatter 38 geht an seinem Ausgang 53 auf logisch H und schaltet das Relais 44 durch. Das bewirkt, daß über den Schließkontakt 45 der Fehlerstrom 34 in die Blinklichtanlage 11 des Wagenzuges eingespeist wird. Dies hat die bereits oben beschriebene Wirkung, daß nämlich der Blinktaktgeber "außer Tritt" gebracht wird und mit erhöhter Frequenz blinkt.

Das Monoflop 42 dient zum Abschalten des Fehlerstromes 34. Die Taktdauer des Monoflops 42 ist auf die erhöhte Blinkfrequenz des Blinktaktgebers 17 derart abgestimmt, daß das Monoflop 42 etwa zusammen mit dem Blinktaktgeber 17 wieder abfällt. Wenn der Blinktaktgeber 17 erneut anspricht, wird das Monoflop 42 erneut getriggert, was bei entsprechendem Zustand des Kontrollausganges 25 und der Hängererkennungsleitung 29 dazu führt, daß das Relais 44 wieder durchschaltet. Wäre der Monoflop 42 nicht vorgesehen, so würde der Fehlerstrom 34 eine Selbsthaltefunktion bewirken, das Signal auf der Leitung 52 wäre immer logisch H und der Ausgang 53 des UND-Gatters 38 könnte nicht wieder auf logisch L gehen.

Der Blinktaktgeber kann jedoch auch so ausgelegt sein, daß er bei Abfall des Blinktaktes das Signal auf dem Kontrollausgang 25 zurücknimmt. Dies würde das UND-Gatter 38 sperren und den Fehlerstrom 34 abschalten. Auf zusätzliche Maßnahmen zum Abschalten des Fehlerstromes 34 könnte dann verzichtet werden.

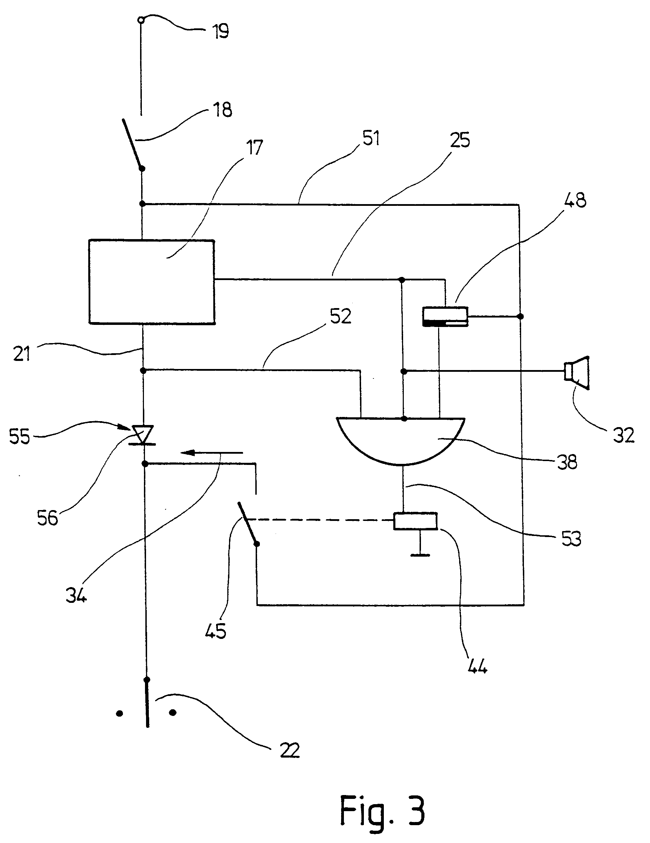

In Fig. 3 ist ein zweites Ausführungsbeispiel der Schaltmittel 26 beschrieben, bei denen der Selbsthalteeffekt auf andere Weise verhindert wird. Zu diesem Zweck ist ein Schaltglied 55 in Form einer Diode 56 vorgesehen, welche zwischen dem Taktausgang 21 und dem Fahrtrichtungsschalter 22 derart geschaltet ist, daß sie mit ihrer Anode zum Taktausgang 21 weist. Der Fehlerstrom 34 wird an der Kathodenseite der Diode 56 eingespeist und kann somit nicht auf die Leitung 52 am Eingang des UND-Gatters 38 zurückkoppeln. Sobald der Taktausgang 21 am Ende der Taktzeit des Blinktaktgebers 17 abfällt, wird dies über die Leitung 52 auf das UND-Gatter 38 übertragen, welches an seinem Ausgang 53 auf logisch L geht. Dadurch fällt das Relais 44 ab und der Fehlerstrom 34 wird abgeschaltet.

Die Verschaltung des Piezosummers 32 ist bei dem Ausführungsbeispiel nach Fig. 3 so getroffen, daß der Piezosummer immer zusammen mit dem Signal am Kontrollausgang 25 anspricht.

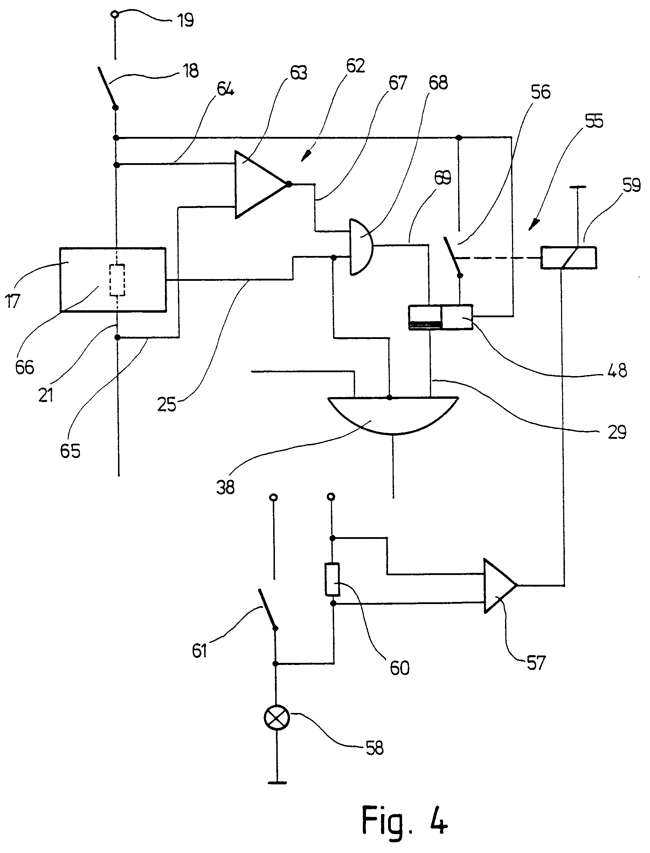

In Fig. 4 ist ausschnittsweise ein drittes Ausführungsbeispiel gezeigt, das als Ergänzung für die Schaltmittel 26 aus den Fig. 2 und 3 vorgesehen ist.

Zunächst ist eine Reset-Vorrichtung 55 zu erkennen, welche mit dem Flip-Flop 48 verbunden ist. Aufgabe der Reset-Vorrichtung 55 ist es, die Hängererkennungsleitung 29 in den Fällen zurückzunehmen, in denen der Fahrzeugführer einen Hänger abgekoppelt hat, ohne vorher oder zwischendurch das Zugfahrzeug abzuschalten. In einem solchen Falle würde nämlich das Flip-Flop 48 weiterhin auf der Hängererkennungsleitung 29 ein entsprechendes Signal ausgeben, was zu einem Fehlverhalten der Schaltmittel 26 führen würde.

Die Reset-Vorrichtung 55 umfaßt einen Schließkontakt 56, welcher einen Rest-Eingang des Flip-Flop 48 mit der Versorgungsspannung 19 verbindet. Der Schließkontakt 56 kann entweder ein Türkontakt sein, so daß er beim Öffnen einer der Türen des Zugfahrzeuges automatisch das Flip-Flop 48 zurücksetzt. Der Schließkontakt 56 kann aber auch gesondert im Fahrzeug vorgesehen sein, so daß der Fahrzeugführer nach dem Abkoppeln des Hängers durch einfachen Druck auf diesen Schalter die Hängererkennungsschalter zurücksetzen kann.

In Fig. 4 ist jedoch gezeigt, daß der Schließkontakt 56 über eine Meßvorrichtung 57 geschaltet wird, welche den Stromfluß durch eine Lampe 58 des Hängers mißt. Die Meßvorrichtung 57 schaltet ein Relais 59, zu dessen Kontakten auch der Schließkontakt 56 zählt.

Die Meßvorrichtung 57 mißt den Spannungsabfall über einen Meßwiderstand 60, der parallel zu einem Schalter 61 für die Lampe 58 geschaltet ist. Die Lampe 58 ist nur beispielhaft angegeben, sie kann beispielsweise das Hängerbremslicht oder das Hängerstandlicht sein. Die Meßvorrichtung 57 kann auf diese Weise entweder den normalen Bremsbetrieb des Hängers überwachen und somit bei dem ersten Bremsvorgang nach dem Abkoppeln des Hängers erkennen, daß der Hänger nicht mehr vorhanden ist. In Fig. 4 ist jedoch gezeigt, daß der Meßwiderstand 60 unmittelbar mit der Versorgungsspannung einerseits und mit der Lampe 58 andererseits verbunden ist. Der Wert des Meßwiderstandes 60 ist so groß, daß nur ein kleiner Strom in die Lampe 58 eingespeist wird, welcher sie noch nicht zum Glimmen bringt. Sobald jetzt die Lampe 58 entfernt wird, fällt keine oder wegen der Parallelschaltung der Lampen des Hängers zu den Lampen des Zugfahrzeuges eine geringere Spannung über den Meßwiderstand 60 ab, und die Meßvorrichtung 57 schließt den Schließkontakt 56, so daß das Signal auf der Hängererkennungsleitung 29 zurückgesetzt wird.

Weiterhin ist in der Schaltung nach Fig. 4 berücksichtigt, daß einige Blinktaktgeber 17 nicht zwischen dem Betrieb von drei Blinklampen je Fahrtrichtung und dem Betrieb von insgesamt vier Blinklampen bei eingeschalteter Warnblinkanlage unterscheiden können. Wenn die Warnblinkanlage eingeschaltet wird, so weisen derartige Blinktaktgeber 17 ein Signal auf dem Kontrollausgang 25 auf, was wiederum dazu führt, daß die Hängererkennungsschaltung 28 anspricht. Beim weiteren Betrieb kommt es dann zu einer Falschmeldung, wenn nämlich nach dem Abschalten der Warnblinkanlage nur zwei Blinklampen je Fahrtrichtung betrieben werden. Die Schaltmittel 26 erkennen dann nämlich einerseits das Signal auf der Hängererkennungsleitung 29, während andererseits das Signal auf dem Kontrollausgang 25 fehlt. Dies führt fälscherlicherweise dazu, daß der Blinktaktgeber in den Zustand mit der erhöhten Taktfrequenz geschaltet wird.

Um diese Falschmeldung zu verhindern, ist eine Verriegelungsvorrichtung 62 vorgesehen, welche eine Meßschaltung 63 umfaßt. Die Meßschaltung 63 ist mit ihrer Eingangsleitung 64 an den Zündschalter 18 geführt, während sie mit ihrer Eingangsleitung 65 an den Taktausgang 21 des Blinktaktgebers 17 geht. Auf diese Weise mißt die Meßschaltung 63 den Spannungsabfall über einem Innenwiderstand 65 des Blinktaktgebers 17. Die Meßschaltung 63 ist jetzt so ausgelegt, daß sie an ihrem invertierenden Ausgang 67 nur solange ein H-Signal ausgibt, solange der Stromfluß durch den Innenwiderstand 66 einen bestimmten Wert nicht überschreitet. Dieser Wert entspricht dem gleichzeitigen Betrieb von vier Blinklampen durch den Blinktaktgeber 17.

Die Meßschaltung 63 ist mit ihrem Ausgang 67 zu einem UND-Gatter 68 geführt, auf dessen zweiten Eingang der Kontrollausgang 25 geführt ist. Das UND-Gatter 68 führt mit seinem Ausgang 69 zu dem Flip-Flop 48. Solange der Strom durch den Innenwiderstand 66 den eingestellten Grenzwert nicht überschreitet, ist der Ausgang der Meßschaltung 63 logisch H, und der Kontrollausgang 25 wird durch das UND-Gatter 68 durchgeschleift und gelangt zu dem Flip-Flop 48.

Wenn jetzt die Warnblinkanlage eingeschaltet wird, fließt durch den Innenwiderstand 66 ein so hoher Strom, daß die Meßschaltung 63 an ihrem Ausgang 67 ein L-Signal ausgibt. Obwohl jetzt auf dem Kontrollausgang 25 ein H-Signal ansteht, kann dieses nicht durch das UND-Gatter 68 hindurch zu dem Flip-Flop 48 gelangen. Mit anderen Worten, die Hängererkennungsschaltung wird nicht geschaltet, obwohl das C2-Signal auf dem Kontrollausgang 25 ansteht.

## Patentansprüche

1. Schaltungsanordnung für eine Blinklichtanlage (11) eines aus einem Zugfahrzeug und einem elektrisch an das Zugfahrzeug anschließbaren Hänger bestehenden Wagenzuges, mit einem Blinktaktgeber (17), der dazu ausgelegt ist, an seinem Taktausgang (21) sämtliche je Fahrtrichtung vorgesehenen Blinklampen (12, 13, 14) des Wagenzuges zu betreiben, der einen Kontrollausgang (25) aufweist, an dem der je Fahrtrichtung gleichzeitige Betrieb der entsprechenden Blinklampen (12, 13, 14) des Zugfahrzeuges und des Hängers angezeigt wird, und der eine Signallampe (23) zur Anzeige des Blinktaktes treibt, wobei der Blinktaktgeber (17) bei nicht elektrisch angeschlossenem Hänger den Ausfall einer angesteuerten Blinklampe (12, 13) des Zugfahrzeuges über eine erhöhte Blinkfrequenz anzeigt, dadurch gekennzeichnet, daß der Kontrollausgang (25) und der Taktausgang (21) des Blinktaktgebers (17) mit Schaltmitteln (26) verbunden sind, die bei elektrisch angeschlossenem Hänger und bei Ausfall einer angesteuerten Blinklampe (12, 13, 14) des Wagenzuges den Blinktaktgeber (17) derart beeinflussen, daß er auf die erhöhte Blinkfrequenz schaltet.

2. Schaltungsanordnung nach Anspruch 1, dadurch gekennzeichnet, daß die Schaltmittel (26) zur Beeinflussung des Blinktaktgebers (17) einen Fehlerstrom (34) in die Blinklichtanlage (11) des Wagenzuges einspeisen.

3. Schaltungsanordnung nach Anspruch 1 oder 2, dadurch gekennzeichnet, daß eine Hängererkennungsschaltung (28) vorgesehen ist, die einen elektrisch an das Zugfahrzeug angeschlossenen Hänger auf einer Hängererkennungsleitung (29) meldet.

4. Schaltungsanordnung nach Anspruch 3, dadurch gekennzeichnet, daß die Hängererkennungsschaltung (28) mit dem Kontrollausgang (25) des Blinktaktgebers (17) verbunden ist und aus den Signalen des Kontrollausganges (25) einen elektrisch angeschlossenen Hänger erkennt.

5. Schaltungsanordnung nach Anspruch 4, dadurch gekennzeichnet, daß die Hängererkennungsschaltung (28) ein Speicherelement (47) umfaßt, welches das erste Ansprechen des Kontrollausganges (25) speichert und permanent auf der Hängererkennungsleitung (29) meldet.

6. Schaltungsanordnung nach einem der Ansprüche 2 bis 5, dadurch gekennzeichnet, daß die Schaltmittel (26) eine Schaltvorrichtung (41) umfassen, die den Fehlerstrom (34) in Übereinstimmung mit dem Takt des Blinktaktgebers (17) wieder abschaltet.

7. Schaltungsanordnung nach einem der Ansprüche 2 bis 5, dadurch gekennzeichnet, daß die Schaltmittel (26) ein Schaltglied (55) umfassen, das den Taktausgang (21) von dem Fehlerstrom (34) entkoppelt.

8. Schaltungsanordnung nach einem der Ansprüche 1 bis 7, dadurch gekennzeichnet, daß der Kontrollausgang (25) mit einer akustischen Einrichtung (31) verbunden ist.

9. Schaltungsanordnung nach den Ansprüchen 2 und 3 oder nach den Ansprüchen 2 und 3 sowie einem der Ansprüche 4 bis 8, dadurch gekennzeichnet, daß die Schaltmittel (26) eine Logikschaltung (37) aufweisen, die den Taktausgang (21), den Kontrollausgang (25) und die Hängererkennungsleitung (29) logisch miteinander verknüpft und an ihrem Ausgang (53) eine Vorrichtung (43) zum Einspeisen des Fehlerstromes (34) schaltet.

10. Schaltungsanordnung nach einem der Ansprüche 3 bis 9, dadurch gekennzeichnet, daß die Hängererkennungsschaltung (28) mit einer Reset-Vorrichtung (55) verbunden ist, über welche die Hängererkennungsschaltung (29) zurückschaltbar ist.

11. Schaltungsanordnung nach Anspruch 10, dadurch gekennzeichnet, daß die Reset-Vorrichtung (55) einen Schließkontakt (56) umfaßt.

12. Schaltungsanordnung nach Anspruch 10 oder 11, dadurch gekennzeichnet, daß die Reset-Vorrichtung (55) eine Meßvorrichtung (56) für den Stromfluß durch ausgewählte Lampen (58) des Hängers umfaßt und in Abhängigkeit von dem Stromfluß die Hängererkennungsleitung (29) zurückschaltet.

13. Schaltungsanordnung für ein Zugfahrzeug mit einer Warnblinkanlage nach einem der Ansprüche 4 bis 12, dadurch gekennzeichnet, daß der Kontrollausgang (25) mit einer Verriegelungsvorrichtung (62) verbunden ist, die in Abhängigkeit von dem Betrieb der Warnblinkanlage den Kontrollausgang (25) von der Hängererkennungsschaltung (28) abkoppelt.

14. Schaltungsanordnung nach Anspruch 13, dadurch gekennzeichnet, daß die Verriegelungsvorrichtung (62) eine Meßschaltung (63) für den von dem Blinktaktgeber (17) abgegebenen Lampenstrom aufweist.
